# EUROPEAN PATENT SPECIFICATION

(11) **EP 1 792 876 B1**
(45) Date of publication and mention of the grant of the patent: **07.02.2018**
(21) Application number: 05257423.3
(22) Date of filing: 02.12.2005
(51) Int. Cl.: C02F 1/68, C02F 5/12, C02F 101/20

(54) **Use of gamma-polyglutamic compounds for removing heavy metals or scale in aqueous systems**
Verwendung der gamma-polyglutamic Mittel zur Entfernung der Schwermetalle oder der Ablagerungen aus den wäßrigen Systemen
Utilisation des composés gamma-polyglutamiques pour éliminer les métaux lourds ou le tartre des systèmes aqueux

(43) Date of publication of application: 06.06.2007
(73) Proprietor: Tung Hai Biotechnology Corporation, Taichung Hsien (TW)
(72) Inventor: Ho, Guan-Huei, Mississauga, Ontario L5N 7Y6 (CA); Yang, Jeng, Taiwan (CN); Yang, Tou-Hsiung, Taiwan (CN)
(74) Representative: J A Kemp

(56) References cited:
- US-B1- 6 533 938

## Description

### TECHNICAL FIELD OF THE INVENTION

The subject invention relates to (e.g. completely) removing toxic metals from water or aqueous systems with γ-polyglutamic acid (γ-PGA, H form), and/or γ-polyglutamates (in Na⁺, K⁺, and/or NH4⁺ forms), usually by the formation of enveloped aggregates of toxic heavy metal chelates with γ-PGA, or γ-polyglutamates.

### TECHNICAL BACKGROUND AND PRIOR ART

Conventional heavy metal separation processes involve the utilization of ion exchange (*see* Sengupta, A. K. (Ed.), Ion Exchange Technology, Technomic Publication Co. Inc., Pensylvania, 1997), precipitations, or membranes. Applicable membrane technologies include nanofiltration, ultrafiltration, and reverse osmosis. Microfiltration membranes containing metal chelating groups have also been used for heavy metal adsorption and separation (*see* Konishi et. al., Binary Metal Ion Sorption During Permeation Through Chelating Porous Membranes, J. Memr. Sci., 111:1, 1996). Various adsorbents and ion exchange materials have been reported for metal ion entrapment. Conventional ion exchange groups are amines, sulfonic and carboxylic group such as amidoxime and phosphoric acid (*see* Jyo, A. et. al., Preparation of Phosphoric Acid Resins with Large Cation Exchange Capacities from Macrorecticular Polyglycidyl Methacrylate-Co-DivinylBenzene Beads and Their Behavior in Uptake of Metal Ions, J. Appl. Polym. Sco., 63:1327, 1997*)*. *Acrylic acid (see* Ibrakin, N., et al., Novel Cation Exchange Composites Resulting from Polymerization/Cross-linking of Acrylic acid/N-Methylolacrylamide Mixtures with Cellulose, J. Appl. Polym. Sci., 49:291, 1993), aminomethyl-phosphoric acid (AMP) (*see* Maeda, H. et al., Studies of Selective Adsorption Resin XXX, Prep. of Macrorecticular Chelating Resins Containing Aminomethylphosphoric Acid Groups From Methylmethacrylate/Divinylbenzene Copolymer Beads and their Adsorption Capacity, J. Appl. Polym. Sci., 33:1275, 1987*)* etc. have been reported in the literature. The reported order of the chelate stability with the AMP resins was Cu⁺² > Pb²⁺ > Ni⁺² > Ca⁺². Traditional ion exchange resins have been used extensively to recover heavy metals and to simultaneously obtain high quality water for reuse.

Porous membranes containing chelating agents provide enhanced mass transfer due to convection (*see* Konishi et. al., Binary Metal Ion Sorption During Permeation Through Chelating Porous Membranes, J. Memr. Sci., 111:1, 1996). Functionalized membranes containing a large number of polymer chains for binding multiple metals to increase the capture capacity of the membranes have been reported (*see* Bhattacharyya et al., Novel Poly-L-Glutamic Acid Fictionalized Microfiltration Membranes for Sorption of Heavy Metals at High Capacity, J. Membrane Sciences, 141, 1998, 121-135). Cellulose and its derivatives provide the most versatile and inexpensive starting materials. Pb⁺⁺ ion with a hydration radius of 0.4 nm would require a maximum surface entrapment capacity of 34 mg Pb/g membrane with a representative 50 m²/g BET membrane surface area for even only single site available for one Pb⁺⁺ ion interaction. Obviously, the metal absorption capacity is still quite low for an industrial application.

The Applicant believes that to remove toxic heavy metal ions from water supply systems for drinking, city water supply, recreational or other industrial use, or reuse has been an important issue for everyone. Safety and health concerns are always a vital issue in the modern living. The inventors have found that an easy, effective, and reliable method of removing toxic heavy metals from the water systems, and dissolving the scales of calcium or magnesium can be accomplished by using PGA, such as γ-polyglutamic acid (γ-PGA, H form) and/or one or more γ-polyglutamates (in Na⁺, K⁺, and/or NH₄⁺ forms) and/or one or more γ-polyglutamate hydrogels (prepared from γ-polyglutamates in Na⁺, K⁺, and/or NH₄⁺ forms). Moreover, the aggregates formed from the heavy metals and γ-polyglutamates can be (easily) separated, for example by press filtration, or membrane ultrafiltration or by other centrifugation devices.

### CONTENT OF THE INVENTION

The subject invention relates to use of γ-polyglutamic acid (γ-PGA, H form), γ-polyglutamate in Na⁺ form, γ-polyglutamate in K⁺ form, or γ-polyglutamate in NH4⁺ form, or a mixture thereof, as a chelating agent for removing a heavy metal selected from the group consisting of Pb, Cd and Cu from water or an aqueous system, wherein the treatment of said water or aqueous system is carried out at a pH from 6.0 to 7.5. The invention also relates to a method of chelating or removing a heavy metal selected from the group consisting of Pb, Cd and Cu from water or an a aqueous system, the method comprising contacting said heavy metal with γ-polyglutamic acid (γ-PGA, H form), γ-polyglutamate in Na⁺ form, γ-polyglutamate in K⁺ form, or γ-polyglutamate in NH4⁺ form, or a mixture thereof, wherein the γ-PGA or γ-polyglutamate acts as a chelating agent for removing the heavy metal from the water or the aqueous system, wherein the treatment of said water or aqueous system is carried out at a pH of 6.0 to 7.5.

### DESCRIPTION OF THE DRAWINGS

Figure 1 shows the chemical structure of γ-polyglutamic acid (γ-PGA, H form) (A), γ-polyglutamate in K⁺ form, γ-polyglutamate in Na⁺ form, and γ-polyglutamate in NH4⁺ form (B), and γ-polyglutamate in Ca⁺⁺ form and γ-polyglutamate in Mg⁺⁺ form (C) M(I)=K⁺, Na+, or NH4⁺ M(II)=Ca⁺⁺ or Mg⁺⁺
Figure 2 shows 400 MHz ¹H-NMR spectra of γ-polyglutamate in Na⁺ form (A), γ-polyglutamate in K⁺ form (B), and γ-polyglutamate in NH4⁺ form (C) in D₂O at neutral pH and temperature of 30°C. Chemical shift was measured in ppm units from the internal standard. X indicates impurity peak.
Figure 3 shows ¹³C-NMR spectra of γ-polyglutamate in K⁺ form (A), γ-polyglutamate in Na⁺ form (B), γ-polyglutamate in Ca⁺⁺ form (C), and γ-polyglutamate in Mg⁺⁺ form (D) in D₂O at neutral pH and temperature of 30°C. Chemical shift was measured in ppm units from the internal reference.
Figure 4 shows infrared (FT-IR) absorption spectra of γ-polyglutamate in Ca⁺⁺ form (C) and γ-polyglutamate in Mg⁺⁺ form (D) in KBr pellet.
Figure 5 shows pH-titration curves of 10% γ-PGA with 0.2N NaOH (A), 2% γ-PGA with Ca(OH)₂ (B), and 4% γ-PGA with 5N NH₄OH (C) at 25°C.

### DETAILED DESCRIPTION OF THE INVENTION

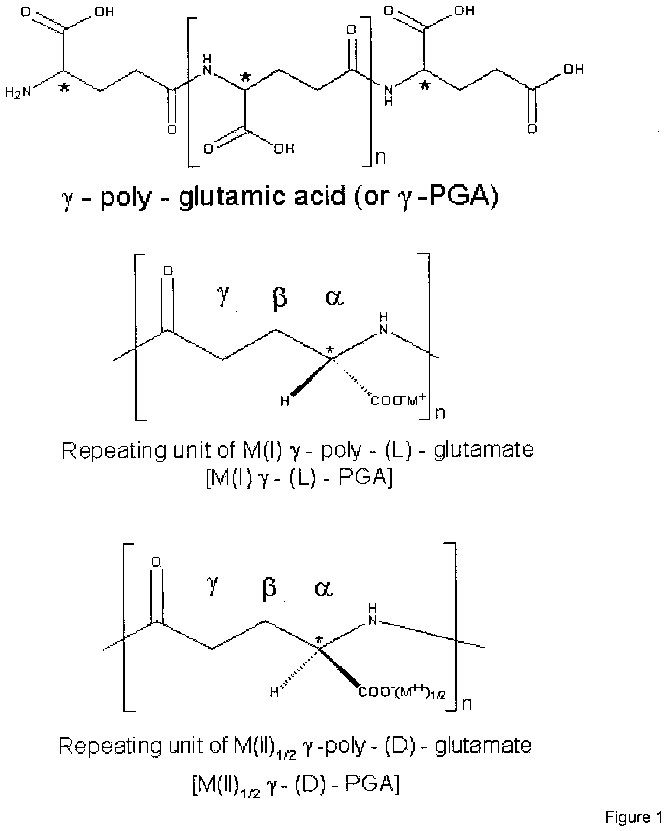

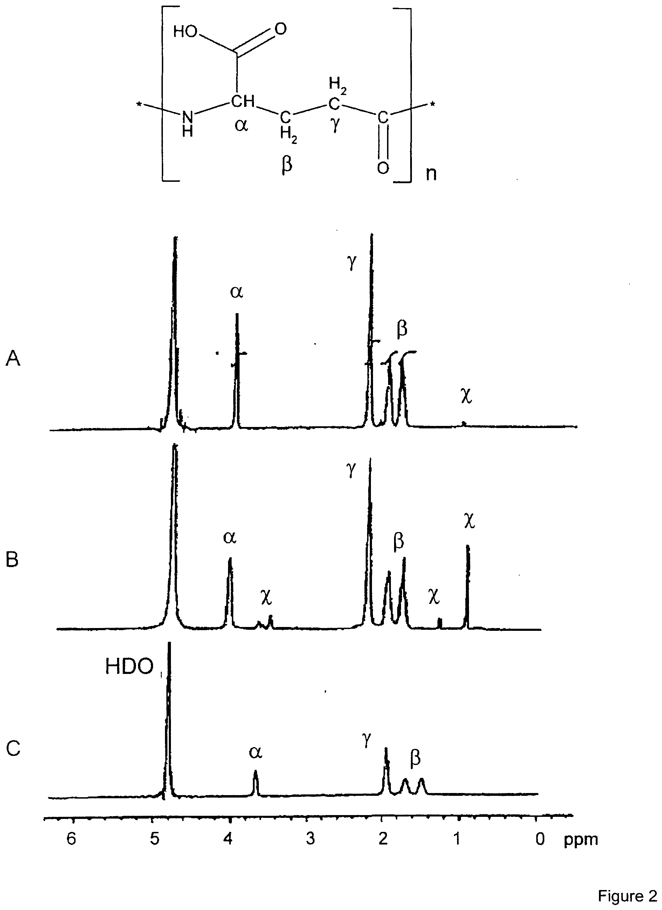

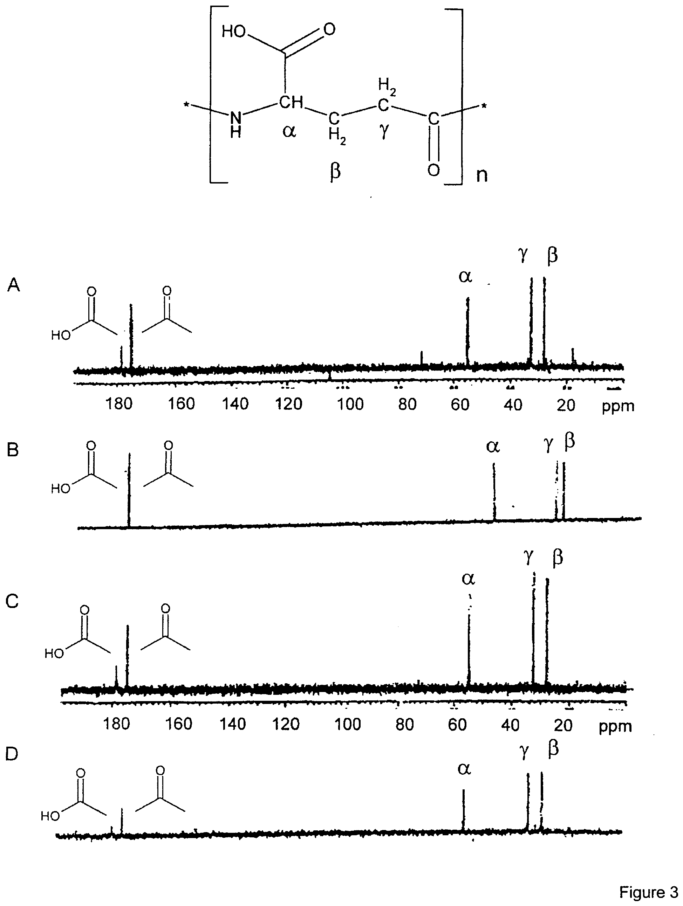

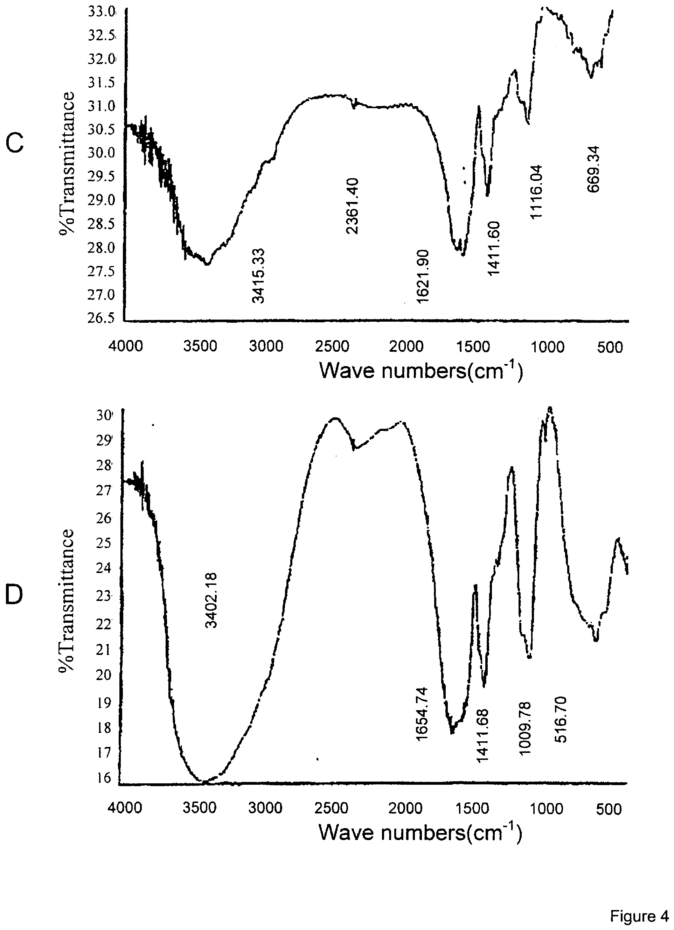

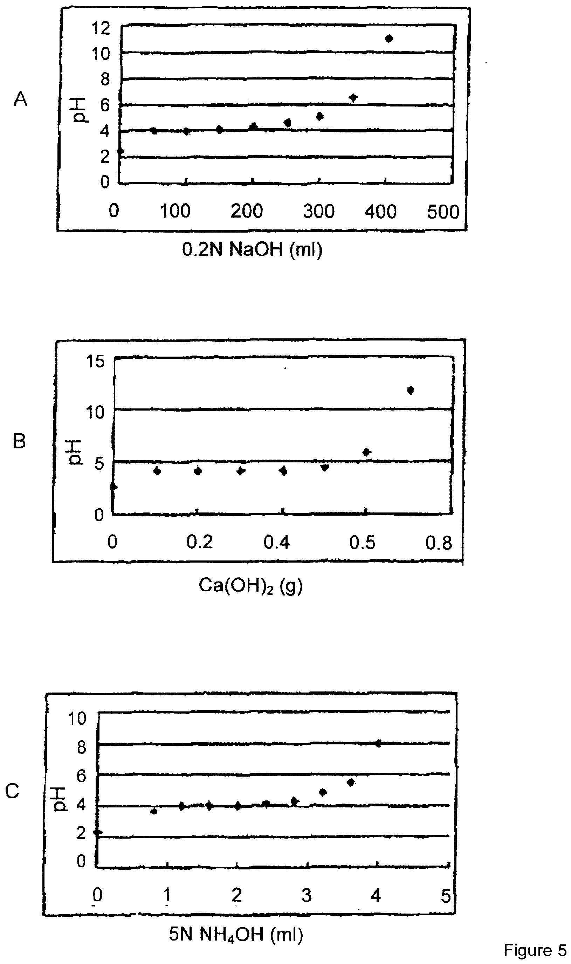

γ-Polyglutamates are biodegradable, non-toxic biopolymers produced from L-glutamic acid via a submerge fermentation process (*see* Ho, Guan-Huei et al., γ-Polyglutamic Acid (γ-PGA) Produced by Bacillus Subtilis var. natto, Structural Characterization, Chemical Properties, and Biological Functionality, Submitted to the Ministry of Economic Affairs, ROC, 2003-07-27*, and* a Gold Prize Winner of The Second International Biotechnology and Medical Care Innovation Award 2003, 2003-11-06, ROC*; and* Yoon, S. H. et al., Production of Poly-γ-Glutamic Acid, Biotechnology Letters, 22: 585-588, 2000). The molecular structures of γ-polyglutamic acid (γ-PGA) and γ-polyglutamates (in Na⁺, K⁺, NH₄⁺, Ca⁺⁺ and Mg⁺⁺ forms) are shown in Figure 1 and the ¹H-NMR, ¹³C-NMR, and FT-IR spectra are shown in Figures 2, 3, and 4, respectively. The spectral analytical data are summarized in Table 1. The titration curves are shown in Figure 5. γ-Polyglutamates possess excellent water absorption properties, and good chelating and retention capacity for the toxic heavy metals normally found in water or aqueous systems, and their polyanionic properties are being explored for applications in flocculation of positively charged colloids or scales (*see* Yokai et al., Floculation Properties of γ-PGA Produced by Bacillus subtilis., J. Fermemt. Bioeng., 82(1),84-87, 1966 *and* Bhattacharyya, et al., Novel Poly-L-Glutamic Acid Fictionalized Microfiltration Membranes for Sorption of Heavy Metals at High Capacity, J. Membrane Sciences, 141(1998), 121-135) in the waste water systems.

**Table 1.**

| ITEM | H | Na⁺ | K⁺ | NH₄⁺ | Ca⁺⁺ | Mg⁺⁺ |
|---|---|---|---|---|---|---|
| a.¹H-NMR(400MHz, D₂O 30°C) | | | | | | |
| Chemical shift in ppm: | | | | | | |
| α CH | | 3.98 | 4.00 | 3.68 | 4.18 | 4.08 |
| β CH₂ | | 1.98, 1.80 | 1.99, 1.80 | 1.68, 1.48 | 2.16, 1.93 | 2.05, |
| γ CH₂ | | 2.19 | 2.19 | 1.93 | 2.38 | 1.88 |
| | | | | | | 2.31 |
| b. ¹³C-NMR(67.9MHz, D₂O, 30°C) | | | | | | |
| Chemical shift in ppm; | | | | | | |
| α CH | | 56.43 | 62.21 | | 62.21 | 62.10 |
| β CH₂ | | 31.61 | 35.16 | | 36.17 | 35.11 |
| γ CH₂ | | 34.01 | 39.74 | | 39.68 | 39.60 |
| CO | | 182.21 | 182.11 | | 182.16 | 182.12 |
| COO⁻ | | 182.69 | 185.46 | | 185.82 | 185.16 |
| a. FT-IR absorption (KBr), cm⁻¹ | | | | | | |
| C=O, Stretch | 1739 | | | | | |
| Amid I, N-H bending | | 1643 | | 1643 | 1622 | 1654 |
| Amide II, stretch | | 1585 | | | | |
| C=O, symmetric stretch | 1454 | 1402 | | 1395 | 1412 | 1411 |
| C-N, stretch | 1162 | 1131 | | 1139 | 1116 | 1089 |
| N-H, oop bending | 698 | 707 | | 685 | 669 | 616 |
| O-H, stretch | 3449 | 3436 | | 3443 | 3415 | 3402 |
| b. Thermal analysis: | | | | | | |
| Hydrated water | 0 | 10% | 42% | | 20% | 40% |
| Dehydration temperature, °C | | 109. | 139. | | 110 | 122 |
| Tₘ, °C | 206 | 160 | 193, 238 | 219 | | 160. |
| T_{d}, °C | 209.8 | 340 | 341 | 223 | 335.7 | 331.8 |

In one embodiment, the subject invention relates to the use of γ-polyglutamic acid (γ-PGA, H form), γ-polyglutamate in Na⁺ form, γ-polyglutamate in K⁺ form, or γ-polyglutamate in NH₄⁺ form, or a mixture thereof as a chelating agent, for removing a heavy metal from water or an aqueous system.

Also disclosed herein are hydrogels, and use of a γ-polyglutamate hydrogel, as a chelating agent (for removing a heavy metal and/or a dissolving agent for removing calcium and/or magnesium scales from water or an aqueous system), wherein said γ-polyglutamate hydrogel comprises or is prepared from γ-polyglutamate in Na⁺ form, γ-polyglutamate in K⁺ form, or γ-polyglutamate in NH₄⁺ form, or a mixture thereof, cross-linked with diglycerol polyglycidyl ether, polyglycerol polyglycidyl ether, sorbitol polyglycidyl ether, polyoxyethylene sorbitol polyglycidyl ether, polysorbitol polyglycidyl ether, or polyethylene glycol diglycidyl ether, or a mixture thereof.

Also disclosed is the use of γ-polyglutamic acid (γ-PGA, H form), γ-polyglutamate in Na⁺ form, γ-polyglutamate in K⁺ form, or γ-polyglutamate in NH₄⁺ form, or a mixture thereof in combination with a γ-polyglutamate hydrogel as a chelating agent (for removing a heavy metal and/or a dissolving agent for removing calcium and/or magnesium scales from water or an aqueous system), wherein said γ-polyglutamate hydrogel comprises or is prepared from γ-polyglutamate in Na⁺ form, γ-polyglutamate in K⁺ form, or γ-polyglutamate in NH₄⁺ form, or a mixture thereof cross-linked with diglycerol polyglycidyl ether, polyglycerol polyglycidyl ether, sorbitol polyglycidyl ether, polyoxyethylene sorbitol polyglycidyl ether, polysorbitol polyglycidyl ether, or polyethylene glycol diglycidyl ether, or a mixture thereof.

Also disclosed is use of a γ-polyglutamate hydrogel as a chelating agent for removing a heavy metal and/or a dissolving agent for removing calcium and/or magnesium scales from water or an aqueous system, wherein said γ-polyglutamate hydrogel comprises or is prepared from γ-polyglutamate in Na⁺ form, γ-polyglutamate in K⁺ form, or γ-polyglutamate in NH₄⁺ form, or a mixture thereof cross-linked by irradiation with gamma ray(s) or electron beams(s).

Also disclosed is use of γ-polyglutamic acid (γ-PGA, H form), γ-polyglutamate in Na⁺ form, γ-polyglutamate in K⁺ form, or γ-polyglutamate in NH₄⁺ form, or a mixture thereof in combination with a γ-polyglutamate hydrogel as a chelating agent (for removing a heavy metal and/or a dissolving agent for removing calcium and/or magnesium scales from water or an aqueous system), wherein said γ-polyglutamate hydrogel comprises or is prepared from γ-polyglutamate in Na⁺ form, γ-polyglutamate in K⁺ form, or γ-polyglutamate in NH₄⁺ form, or a mixture thereof cross-linked by irradiation with gamma ray or electron beams.

γ-Polyglutamic acid (γ-PGA, H form) is a glutamic acid polymer with a degree of polymerization ranging from 1,000 up to 20,000, and formed in only γ-peptide linkage between the glutamic moieties. γ-PGA contains a terminal amine and multiple α-carboxylic acid groups. The polymer generally exists in several states: helix, random coil, β-sheet, helix-coil transition region and enveloped aggregate, depending on the environmental conditions such as pH, ionic strength and other cationic species. With circular dichroism (CD), the amount of helical form present is usually measured as a function of magnitude of the spectra at 222 nm. Helix-coil transition takes place from about pH 3 to 5 for free form of γ-polyglutamic acid (γ-PGA) in homogeneous, aqueous solution, and shift to a higher pH 5 to 7 for a bonded form. The transition from random coil to enveloped aggregation occurs when complex-coordination with certain divalent and some higher metallic ions through drastic conformational change of γ-PGA from linear coil into enveloped aggregate.

Without being bound with theory, it is believed that the adsorption of metal ions onto γ-PGA (a polyelectrolyte anion) involves two possible mechanisms: (A) direct interaction of metal ions with carboxylic sites and (B) retention of heavy metal counter-ions in mobile form by the electrostatic potential field created by the COO⁻ groups. Besides the interactions with the carboxylic groups, amide linkages may also provide weak interaction sites. In addition to the conformational structure and ionization of γ-PGA, it is also important to know the types of hydrolyzed metal species, which are present in aqueous solutions. The formation of a variety of different species may result in different adsorption capacities of metals. The term "heavy metal" used herein generally refers to, but is not limited to, Pb, Cd, Al, Fe, Cu, Mn, Cr, Zn, Ni, or Se. An excellent review of metal ion chelation and metal ion-ligand correlations was reported by Hancock and Martell (*see* Hancock, R. D. and Martell, A. E., Ligand Design for Selective Complexation of Metal Ions in Aqueous Solution, Chem. Rev. 89 (1989), 1875*-*). The metal ion-chelate/complexation stability constants Log K₁ (L) increase with the acidity of the metal ions (first metal hydrolysis constant, Log K₁ (OH⁻)). The Log K₁ (L)s are 4.0, 4.5, 5.5, 7.7, and 12 for Cd⁺⁺, Pb⁺⁺, Ni⁺⁺, Cu⁺⁺, and Fe⁺⁺⁺ with glutamic acid, respectively. The corresponding log K₁ (OH⁻)s are 4.2, 6.3, 4.6, 7.0, and 11, respectively. The formation of a variety of different species may lead to different molar absorption capacities of metal ions.

Moreover, according to the subject invention, water or aqueous solution systems (to be treated normally) can have a pH of from 6.0 to 7.5.

γ-Polyglutamic acid (γ-PGA, H form), γ-polyglutamates (in Na⁺, K⁺, and NH₄⁺ forms) and their γ-polyglutamate hydrogels showed strong and selectively binding with the toxic heavy metal ions of Pb⁺⁺, Cd⁺⁺, Al⁺⁺⁺, Fe⁺⁺, Fe⁺⁺⁺, Cu⁺⁺, Mn⁺⁺, Cr⁺⁺⁺, Zn⁺⁺, Ni⁺⁺, and Se⁺⁺⁺⁺ and precipitate through formation of aggregated chelates which can be easily removed by conventional filtration apparatus or membrane filtration systems. Therefore, high quality drinking water, city water, and industrial water supply free of toxic heavy metals can be obtained.

γ-polyglutamic acid (γ-PGA, H form), γ-polyglutamates (in Na⁺, K⁺, and NH₄⁺ forms) and their γ-polyglutamate hydrogels can react with calcium salts and magnesium salts to form water soluble, stable calcium γ-polyglutamate and magnesium γ-polyglutamate, respectively. γ-Polyglutamic acid (γ-PGA, H form), γ-polyglutamates, and/or γ-polyglutamate hydrogels can be excellent for dissolving and controlling the calcium salt scale(s) or deposit, or (hard) calcium/magnesium mixed salt scale(s) formation normally found in water systems such as piping, tanks, and other processing equipment, and the invention extends to the treatment of such systems with the PGA (or polymers thereof), optionally in hydrogels, as described earlier.

Treatments with microfiltration, ultrafiltration, ion-exchange, or reverse osmosis are not satisfactory and often leave with residual toxic heavy metals in the drinking water or city water supply systems. Those residual quantities of toxic heavy metals can be completely eliminated by using γ-polyglutamates and the γ-polyglutamate or γ-PGA based hydrogels through chelation or complexation. Upon chelating the heavy metal ions of Pb⁺⁺, Cd⁺⁺, Al⁺⁺⁺, Fe⁺⁺, Fe⁺⁺⁺, Cu⁺⁺, Mn⁺⁺, Cr⁺⁺⁺, Zn⁺⁺, Ni⁺⁺, and Se⁺⁺⁺⁺, the γ-polyglutamate molecule can change its conformation from open linear coil into enveloped aggregate through multi-dentate complexing and tightly bound the chelated heavy metal ions. The large aggregate then precipitated out of the liquid, and was separated from the water phase (using any type of filtration system). γ-Polyglutamic acid, γ-polyglutamates and/or γ-polyglutamate hydrogels can thus be ideal adsorbents for completely eliminating the heavy toxic metal ions from water or aqueous systems to produce drinking water or city water supply free of heavy metal ions.

γ-Polyglutamic acid (γ-PGA, H form) contains a large number of carboxylic pendants for multiple metal binding sites. γ-Polyglutamic acid (γ-PGA, H form) exists in at least 5 different conformational states depending on the existing environment conditions. They are the α-helix at low pH (*see* Zanuy, D., et al., On the Helical Conformation of Un-Ionized Poly-(γ-D-Glutamic Acid), Int'l. J. of Biological Macromolecules 23 (1998), 175-184), beta-sheet in the microbial cell envelope, linear coil at near and neutral pH, and enveloped aggregate upon binding with certain metal ions, and the helix-random coil transitional state (*see* Holtzer A. et al., The State of Aggregation of a Helical-Poly(L-Glutamic Acid) in Aqueous Salt Solutions, J. Am. Chem. Soc. 118 (1996), 4220*-*). The repeat unit length is 0.15 nm in the α-helix conformational states, and 0.35 nm in the linear random-coil conformational state, respectively, and 4.8 Å for a translational turn of every 3 residues. The pKₐ of the side chain α-carboxyl groups on the γ-polyglutamic acid (γ-PGA, H form) is 4.06. At pH of 4.06, there exists about equal amount of non-ionized form alpha-helix form and ionized linear coil form in the aqueous solution.

Our studies showed that γ-polyglutamic acid (γ-PGA) can undergo a conformational change from a linear random-coil conformation into a dense enveloped aggregate upon chelating the heavy metal ions, and can precipitate out of the liquid phase, which can allow for the elimination of the toxic metal ions from the water systems.

### EXPERIMENTAL METHODS OF THE INVENTION

Commercial quantity of γ-polyglutamic acid (γ-PGA, H form) and its salts, γ-polyglutamates (in Na⁺, K⁺, and NH₄⁺ forms) can be produced in a submerged fermentation process with *Bacillus subtilis* var. natto, or *Bacillus licheniformis* (see JP 05-316999) by using L-glutamic acid and glucose as main feed stocks. The microbial culture media contain carbon source, nitrogen source, inorganic minerals, and other nutrients in a proper quantity. Usually, the amount of L-glutamic acid is used at a concentration ranging from 3 to 12%,glucose at a concentration of 5-12%, citric acid at a concentration of 0.2 to 2% are used as partial carbon source; peptone and ammonium sulfate or urea are used as nitrogen sources; yeast extract is used as nutrient source; Mn⁺⁺, Mg⁺⁺ and NaCl are used as mineral sources. Under proper aeration and agitation, the culture are maintained at temperatures from 30 to 40 °C, and pH is maintained at 6-7.5 by using urea solution or sodium hydroxide solution; the culture time is normally continued for a period of 48 to 84 hours. γ-Polyglutamic acid (γ-PGA, H form) and its salts, γ-polyglutamates (in Na⁺, K⁺, and NH₄⁺ forms) are accumulated extracellularly.

γ-Polyglutamic acid (γ-PGA, H form) and its salts, γ-polyglutamates (in Na⁺, K⁺, and NH₄⁺ forms) are normally extracted from the fermentation broth by a series of procedure including, ultra-centrifugation, or pressurized filtration to separate cells, then adding 3-4 times of ethanol to precipitate out γ-polyglutamic acid (γ-PGA, H form) and its salts, γ-polyglutamates (in Na⁺, K⁺, and NH₄⁺ forms). The precipitates are re-dissolved in water, and use another portion of ethanol to precipitate out γ-polyglutamic acid (γ-PGA, H form) and its salts, γ-polyglutamates (in Na⁺, K⁺, and NH₄⁺ forms). The dissolution-precipitation steps are repeated several times in order to recover pure γ-polyglutamic acid (γ-PGA, H form) and its salts, γ-polyglutamates (in Na⁺, K⁺, and NH₄⁺ forms).

γ-Polyglutamic acid (γ-PGA, H form) and its salts, γ-polyglutamates (in Na⁺, K⁺, and NH₄⁺ forms) are normally dissolved in a (proper) solvent such as water, ethanol or methanol and pH is adjusted to 5.0 to 7.5. The properly selected multiple functional chemical cross-linking agents such as polyglycerol polyglycidyl ethers, sorbitol-based polyglycidyl ethers, polyethylene glycol diglycidyl ether, or trimethylolpropane triacrylate are added to the solution under constantly stirring, at a dose rate ranging from 0.01 to 20% of the weight of γ-polyglutamic acid (γ-PGA, H form) and its salts, γ-polyglutamates (in Na⁺, K⁺, and NH₄⁺ forms), depending on the type of cross-linking agents and the quality of hydrogels required. The gelling reaction is normally completed within 1 to 4 hours at a reaction temperature from 50 to 120 °C depending on the equipment and conditions used. The hydrogels formed are then freeze-dried to produce dried cross-linked γ-polyglutamic acid (γ-PGA, H form) and its salts, γ-polyglutamate hydrogels (prepared from γ-polyglutamates in Na⁺, K⁺, and NH₄⁺ forms), which can possess super water absorption capacity, are non-water soluble, and form colourless, transparent and biodegradable hydrogels when fully swell in water.

γ-Polyglutamic acid (γ-PGA, H form) and its salts, γ-polyglutamates (in Na⁺, K⁺, and NH₄⁺ forms) with molecular weight ranging from 5,000 to 900,000 can be produced by controlled acidic-hydrolysis at a specific selected reaction conditions of pH, temperature, reaction time and concentration of γ-polyglutamic acid (γ-PGA, H form). The pH can be controlled from pH 2.5 to 6.5 with proper acidulants such as HCl, H₂SO₄, or other organic acids, the hydrolysis temperature can be controlled in the range from 50 to 100 °C, the reaction time from 0.5 to 5 hours, and the concentration of γ-polyglutamic acid (γ-PGA, H form) with molecular weight from 1x10⁶ and higher can be any concentration as convenient as required. After the reaction is completed, further purification with dialysis or membrane filtration and drying are necessary to produce high purity small and middle molecular weight γ-polyglutamic acid (γ-PGA, H form) and its salts, γ-polyglutamates (in Na⁺, K⁺, and NH₄⁺ forms) of choice. The acid-hydrolysis rate is faster at lower pH, higher temperature, and higher concentration of γ-polyglutamic acid (γ-PGA, H form). The γ-polyglutamate salts (in Na⁺, K⁺, and NH4⁺ forms) can be produced by reaction of selected γ-polyglutamic acid (γ-PGA, H form) with basic hydroxide solution or oxide of the metal ions (Na⁺, K⁺, NH₄⁺) of choice and pH adjusted to desired condition from 5.0 to 7.2.as required.

### EXPERIMENTAL EXAMPLES

In order to further explain this invention, the following experimental examples show how this invention can be utilized to remove the toxic metal ions from water. The examples also illustrate how calcium and magnesium scales of calcium and/or magnesium origin can be dissolved.

### EXPERIMENTAL EXAMPLE 1

### Absorption of Pb⁺⁺ with γ-polyglutamate (in Na⁺ form)

A 100 ml working solution of 2% γ-polyglutamate (in Na⁺ form) was prepared by dissolving γ-polyglutamic acid (γ-PGA, H form) with molecular weight of 890x10³ in de-ionized water, and pH was adjusted to 6.0 with 20% NaOH solution. A 25 ml working solution of 10⁻²M Pb(NO₃)₂ was prepared from C.P. grade Pb(NO₃)_{2.}. 15 ml of a series of different concentrations of Pb(NO₃)₂ in the final concentration of 0.09, 0.12, 0.17, 0.22, 0.36, and 0.45 mmol/L were prepared and 25 ml of 0.016% γ-polyglutamate (in Na⁺ form) was added to each of the Pb(NO₃)₂ solution, mix well and pH was then adjusted with 10% NaOH solution to pH 6.0, de-ionized water was added to a total final volume of 50 ml. The mixtures were mixed well and let stood for 30 minutes for complete chelation, then the precipitates were filtered using an ultrafiltration membrane filtration cartridge with a molecular weight cut-off of 20,000 daltons to separate the precipitates. The residual Pb⁺⁺ ion concentrations in clear filtrate were then determined using an ICP/MS analyzer.

The results from experimental example 1 were shown in Table 2.

**Table 2. Chelation of Pb⁺⁺ ion with γ-polyglutamic acid (γ-PGA, H form) at 25 °C, pH 6.0, and 0.008% γ-polyglutamic acid**

| Original conc. of Pb⁺⁺, [Pb⁺⁺]ₒ, mMol./L | Conc. of Pb⁺⁺ in Filtrate, mMol./L | Pb⁺⁺ adsorbed by γ- PGA, mMol./L | Pb⁺⁺ adsorbed by γ- PGA, mMol./g |
|---|---|---|---|
| 0.09 | 0.00 | 0.09 | 1.09 |
| 0.12 | 0.00 | 0.12 | 1.48 |
| 0.17 | 0.00 | 0.17 | 2.15 |
| 0.22 | 0.00 | 0.22 | 2.66 |
| 0.36 | 0.03 | 0.33 | 4.07 |
| 0.45 | 0.14 | 0.31 | 4.12 |

The above results showed that Pb⁺⁺ ions were chelated with γ-polyglutamate and formed stable white precipitates in the form of Pb⁺⁺ and γ-PGA complex aggregates. The saturated absorption capacity is about 4 mMol. of Pb⁺⁺ per gram of γ- PGA.

### EXPERIMENTAL EXAMPLE 2

### Absorption of Cd⁺⁺ with γ-polyglutamate (in Na⁺ form).

In experimental example 1, C.P. grade Cd(NO₃)₂ was used to replace Pb(NO₃)₂, and the same experiment was repeated with a series of different concentrations of Cd(NO₃)₂ in the final concentrations of 0.09, 0.12, 0.17, 0.21, 0.34, and 0.42 mMol./L were used.

The results from experimental example 2 were shown in Table 3.

**Table 3. Chelation of Cd⁺⁺ ion with γ-polyglutamic acid (γ-PGA, H form) at 25 °C, pH 6.0, and 0.008% γ-polyglutamic acid**

| Original conc. of Cd⁺⁺, [Cd⁺⁺]ₒ, mMol./L | Conc. of Cd⁺⁺ in Filtrate, mMol./L | Cd⁺⁺ adsorbed by γ- PGA, mMol./L | Cd⁺⁺ adsorbed by γ- PGA, mMol./g |
|---|---|---|---|
| 0.09 | 0.00 | 0.09 | 1.15 |
| 0.12 | 0.00 | 0.12 | 1.52 |
| 0.17 | 0.00 | 0.17 | 2.09 |
| 0.21 | 0.00 | 0.21 | 2.65 |
| 0.34 | 0.04 | 0.30 | 3.71 |
| 0.42 | 0.12 | 0.30 | 3.73 |

The above results showed that Cd⁺⁺ ions were chelated with γ-polyglutamate and formed stable precipitates in the form of Cd⁺⁺ and γ- PGA complex aggregates. The saturated absorption capacity is about 3.7 mMol. of Cd⁺⁺ per gram of γ- PGA.

### EXPERIMENTAL EXAMPLE 3

### Absorption of Cu⁺⁺ with γ-polyglutamate (in Na⁺ form)

In experimental example 1, C.P. grade Cu(NO₃)₂ was used to replace Pb(NO₃)₂, and the same experiment was repeated with a series of different concentrations of Cu(NO₃)₂ in the final concentrations of 0.08, 0.11, 0.16, 0.20, 0.33, and 0.42 mMol./L were used.

The results from experimental example 3 were shown in Table 4.

**Table 4. Chelation of Cu⁺⁺ ion with γ-polyglutamic acid (γ-PGA, H form) at 25 °C, pH 6.0, and 0.008% γ-polyglutamic acid**

| Original conc. of Cu⁺⁺, [Cu⁺⁺]ₒ, mMol./L | Conc. of Cu⁺⁺ in Filtrate, mMol./L | Cu⁺⁺ adsorbed by γ- PGA, mMol./L | Cu⁺⁺ adsorbed by γ- PGA, mMol./g |
|---|---|---|---|
| 0.08 | 0.00 | 0.08 | 1.03 |
| 0.11 | 0.00 | 0.11 | 1.42 |
| 0.16 | 0.00 | 0.16 | 1.99 |
| 0.20 | 0.00 | 0.20 | 2.56 |
| 0.33 | 0.00 | 0.33 | 4.16 |
| 0.42 | 0.03 | 0.39 | 4.85 |

The above results showed that Cu⁺⁺ ions were chelated with γ-polyglutamate and formed stable cyan precipitates in the form of Cu⁺⁺ and γ-PGA complex aggregates. The saturated absorption capacity is about 4.5 mMol. of Cu⁺⁺ per gram of γ- PGA.

### EXPERIMENTAL EXAMPLE 4

### Absorption of Fe⁺⁺ with γ-polyglutamate (in Na⁺ form)

In experimental example 1, C.P. grade Fe(NO₃)₂ was used to replace Pb(NO₃)₂, and the same experiment was repeated with a series of different concentrations of Fe(NO₃)₂ in the final concentrations of 0.024, 0.031, 0.045, 0.060, 0.093, and 0.126 mMol./L , and pH 4.0 were used.

The results from experimental example 4 were shown in Table 5.

**Table 5. Chelation of Fe⁺⁺ ion with γ-polyglutamic acid (γ-PGA, H form) at 25 °C, pH 4.0, and 0.002% γ-polyglutamic acid**

| Original conc. of Fe⁺⁺, [Fe⁺⁺]ₒ, mMol./L | Conc. of Fe⁺⁺ in Filtrate, mMol./L | Fe⁺⁺ adsorbed by γ- PGA, mMol./L | Fe⁺⁺ adsorbed by γ- PGA, mMol./g |
|---|---|---|---|
| 0.024 | 0.006 | 0.018 | 0.93 |
| 0.031 | 0.006 | 0.025 | 1.23 |
| 0.045 | 0.008 | 0.037 | 1.82 |
| 0.060 | 0.010 | 0.050 | 2.52 |
| 0.093 | 0.020 | 0.073 | 3.68 |
| 0.126 | 0.038 | 0.088 | 4.37 |

The above results showed that Fe⁺⁺ ions were chelated with γ-polyglutamate and formed stable yellow precipitates in the form of Fe⁺⁺ and γ-PGA complex aggregates. The saturated absorption capacity is about 0.5 mMol. of Fe⁺⁺ per gram of γ- PGA.

### EXPERIMENTAL EXAMPLE 5

### Absorption of Al⁺⁺⁺ with γ-polyglutamate (in Na⁺ form)

In experimental example 1, C.P. grade Al(NO₃)₃ was used to replace Pb(NO₃)₂, and the same experiment was repeated with a series of different concentrations of Al(NO₃)₂ in the final concentrations of 0.041, 0.053, 0.073, 0.092, 0.153, and 0.193 mMol./L, and pH 4.0 were used.

The results from experimental example 5 were shown in Table 6.

**Table 6. Chelation of Al⁺⁺⁺ ion with γ-polyglutamic acid (γ-PGA, H form) at 25 °C, pH 4.0, and 0.008% γ-polyglutamic acid**

| Original conc. of Al⁺⁺⁺, [Al⁺⁺⁺]ₒ, mMol./L | Conc. of Al⁺⁺⁺ in Filtrate, mMol./L | Al⁺⁺⁺ adsorbed by γ- PGA, mMol./L | Al⁺⁺⁺ adsorbed by γ- PGA, mMol./g |
|---|---|---|---|
| 0.041 | 0.001 | 0.040 | 1.91 |
| 0.053 | 0.001 | 0.052 | 2.59 |
| 0.073 | 0.018 | 0.055 | 2.75 |
| 0.092 | 0.035 | 0.057 | 2.84 |
| 0.153 | 0.091 | 0.062 | 3.11 |
| 0.193 | 0.126 | 0.067 | 3.32 |

The above results showed that Al⁺⁺⁺ ions were chelated with γ-polyglutamate and formed stable white precipitates in the form of Al⁺⁺⁺ and γ-PGA complex aggregates. The saturated absorption capacity is about 2.0 mMol. of Al⁺⁺⁺ per gram of γ- PGA.

### EXPERIMENTAL EXAMPLE 6

### Competitive absorption of Pb⁺⁺, Cd⁺⁺, and Cu⁺⁺ in a mixture with γ-polyglutamate (in Na⁺ form)

In experimental example 1, C.P. grade Pb(NO₃)₂, Cd(NO₃)₂ and Cu(NO₃)₂ were used, and the same experiment was repeated with different concentration of Pb(NO₃)₂, Cd(NO₃)₂ and Cu(NO₃)₂ in the final volume of 50 ml.

The results from experimental example 6 were shown in Table 7.

**Table 7. Competitive chelation of Pb⁺⁺, Cd⁺⁺, and Cu⁺⁺ ions in a mixture with γ-polyglutamate (in Na⁺ form) at 25 °C, pH 6.0 (0.002% γ-polyglutamic acid was used in this study).**

| | Metal ions in the mixture | Ion concentration mMol./L | Ion concentration mMol./L |
|---|---|---|---|
| Pb⁺⁺ | [Pb⁺⁺]original, [Pb⁺⁺]ₒ | 0.0306 | 0.0647 |
| | Pb⁺⁺] free in filtrate | 0.0002 | 0.0101 |
| | [Pb⁺⁺] absorbed by γ-PGA | 1.52 mMol./g | 2.73 mMol./g |
| | | | |
| Cd⁺⁺ | [Cd⁺⁺]original, [Cd⁺⁺]ₒ | 0.033 | 0.0668 |
| | Cd⁺⁺] free in filtrate | 0.0147 | 0.0648 |
| | [Cd⁺⁺] absorbed by γ-PGA | 0.91 mMol./g | 0.10 mMol./g |
| | | | |
| Cu⁺⁺ | [Cu⁺⁺]original, [Cu⁺⁺]ₒ | 0.0323 | 0.0668 |
| | Cu⁺⁺] free in filtrate | 0.0032 | 0.0404 |
| | [Cu⁺⁺] absorbed by γ-PGA | 1.46 mMol./g | 1.33 mMol./g |

The results in Table 7 showed that the competitive chelation of heavy metal ions with γ-polyglutamate (in Na⁺ form) at 25 °C, pH 6.0. are in the order: Pb⁺⁺ >Cu⁺⁺ >Cd⁺⁺. The original ion concentrations were reduced from 0.03 mMol./L to 0.0002, 0.0032, and 0.0147 mMol./L for Pb⁺⁺, Cd⁺⁺, and Cu⁺⁺ ions, respectively. With more than saturated quantity of γ-polyglutamate (in Na⁺ form) used, the heavy metal ions of Pb⁺⁺, Cd⁺⁺, and Cu⁺⁺ can be completely absorbed and resulting in precipitation of aggregates of chelated complexes.

### EXPERIMENTAL EXAMPLE 7

### Effect of pH on competitive absorption of Pb⁺⁺, Cd⁺⁺, and Cu⁺⁺ in a mixture with γ-polyglutamate (in Na⁺ form)

In experimental example 1, C.P. grade Pb(NO₃)₂, Cd(NO₃)₂ and Cu(NO₃)₂ were used, and the same experiment was repeated at 25°C and pH 4.28 with different concentration of Pb(NO₃)₂, Cd(NO₃)₂ and Cu(NO₃)₂ in the final volume of 50 ml.

The results from experimental example 7 were shown in Table 8.

**Table 8. Effect of pH on competitive chelation of Pb⁺⁺, Cd⁺⁺, and Cu⁺⁺ ions in a mixture with γ-polyglutamate (in Na⁺ form) at 25 °C, pH 4.28 (0.002% γ-polyglutamic acid was used in this study)**

| | Metal ions in the mixture | Ion concentration mMol./L | Ion concentration mMol./L |
|---|---|---|---|
| Pb⁺⁺ | [Pb⁺⁺]original, [Pb⁺⁺]ₒ | 0.0306 | 0.0647 |
| | Pb⁺⁺] free in filtrate | 0.0026 | 0.0163 |
| | [Pb⁺⁺] absorbed by γ-PGA | 1.45 mMol./g | 2.42 mMol./g |
| | | | |
| Cd⁺⁺ | [Cd⁺⁺]original, [Cd⁺⁺]ₒ | 0.033 | 0.0668 |
| | Cd⁺⁺] free in filtrate | 0.0312 | 0.0668 |
| | [Cd⁺⁺] absorbed by γ-PGA | 0.09 mMol./g | 0.00 mMol./g |
| | | | |
| Cu⁺⁺ | [Cu⁺⁺]original, [Cu⁺⁺]ₒ | 0.0323 | 0.0670 |
| | Cu⁺⁺] free in filtrate | 0.00264 | 0.0668 |
| | [Cu⁺⁺] absorbed by γ-PGA | 0.29 mMol./g | 0.01 mMol./g |

The results in Table 8 showed that the competitive chelation of heavy metal ions with γ-polyglutamate (in Na⁺ form) at 25 °C, pH 4.28. are in the order: Pb⁺⁺>Cu⁺⁺>Cd⁺⁺. The original ion concentrations were reduced from 0.03 mMol./L to 0.0026, 0.00265, and 0.0312 mMol./L for Pb⁺⁺, Cu⁺⁺, and Cd⁺⁺ ions, respectively. Obviously, the lower pH of the solution, the less chelating capacity for γ-polyglutamate (in Na⁺ form). The chelating capacities were reduced from 1.52, 1.46, 0.91 mMol./g adsorbed to 1.45, 0.29, and 0.09 mMol./L for Pb⁺⁺, Cu⁺⁺, and Cd⁺⁺ ions, respectively. The maximum chelating capacities of Pb⁺⁺, Cu⁺⁺, and Cd⁺⁺ ions by γ-polyglutamate (in Na⁺ form) appear to be in the range from pH 6 to pH 7.5, which coincide with the pH range of a fully opened linear random coil conformation of γ-polyglutamate (in Na⁺ form). With more than saturated quantity of γ-polyglutamate (in Na⁺ form) used, the heavy metal ions of Pb⁺⁺, Cd⁺⁺, and Cu⁺⁺ can be completely absorbed and resulting in precipitation of aggregates of chelated complexes.

### EXPERIMENTAL EXAMPLE 8

### Saturation binding of Pb⁺⁺, Cd⁺⁺, and Cu⁺⁺ with γ-polyglutamate (in Na⁺ form) in water

In experimental example 1, C.P. grade Pb(NO₃)₂, Cd(NO₃)₂ and Cu(NO₃)₂ were used, and the same experiment was repeated at 25°C and pH 6.0 with different concentrations of γ-polyglutamate (in Na⁺ form).

The results from experimental example 8 are shown in Table 9.

**Table 9. Saturation binding of Pb⁺⁺, Cd⁺⁺, and Cu⁺⁺ with γ-polyglutamate (in Na⁺ form) in water at 25□ and pH 6.0**

| Original conc. Of Pb⁺⁺, [Pb⁺⁺]ₒ, mMol./L | Pb⁺⁺ adsorbed by γ- PGA, mMol./g at different concentration of original conc. of γ-PGA, [y- PGA]ₒ | | |
|---|---|---|---|
| | 0.002% | 0.004% | 0.008% |
| 0.09 | 3.99 | 2.34 | 1.04 |
| 0.13 | 4.18 | 3.03 | 1.54 |
| 0.17 | 4.37WP | 3.95 | 2.15 |
| 0.22 | 4.50WP | 4.03WP | 2.71WP |
| 0.35 | 4.56WP | 4.11WP | 4.07WP |
| 0.45 | ------ | ----- | ----- |
| | | | |

| Original conc. of Cd⁺⁺, [Cd⁺⁺]ₒ, mMol./L | Cd⁺⁺adsorbed by γ- PGA, mMol./g at different concentration of original conc. of γ-PGA, [y- PGA]ₒ | | |
|---|---|---|---|
| | 0.002% | 0.004% | 0.008% |
| 0.09 | 4.43 | 2.68 | 1.15 |
| 0.12 | 4.35 | 3.10 | 1.52 |
| 0.17 | 4.20WP | 3.89 | 2.09 |
| 0.21 | 4.15WP | 3.90WP | 2.65 |
| 0.34 | 3.64WP | 3.84WP | 3.71WP |
| 0.42 | 3.38WP | 3.56WP | 3.73WP |
| | | | |

| Original conc. of Cu⁺⁺, [Cu⁺⁺]ₒ, mMol./L | Cu⁺⁺adsorbed by γ- PGA, mMol./g at different concentration of original conc. of γ-PGA, [y- PGA]ₒ | | |
|---|---|---|---|
| | 0.002% | 0.004% | 0.008% |
| 0.08 | 4.06 | 2.29. | 1.03 |
| 0.11 | 4.84 | 3.03 | 1.42 |
| 0.16 | 4.89CP | 4.00 | 1.99 |
| 0.20 | 4.97CP | 4.71CP | 2.56CP |
| 0.33 | 5.90CP | 5.42CP | 4.16CP |
| 0.42 | 5.90CP | 5.43CP | 4.85CP |

| | | | |
|---|---|---|---|
| Note: WP means white precipitates formed, CP means cyan precipitates formed. | | | |

The above results showed that Pb⁺⁺, Cd⁺⁺, and Cu⁺⁺ ions were chelated with γ-polyglutamate to form stable white, white, and cyan precipitates of metal ions and γ-PGA complex aggregates, respectively. The saturated absorption capacity is about 2.0 mMol.

## Claims

1. Use of γ-polyglutamic acid (γ-PGA, H form), γ-polyglutamate in Na⁺ form, γ-polyglutamate in K⁺ form, or γ-polyglutamate in NH4⁺ form, or a mixture thereof as a chelating agent for removing a heavy metal selected from the group consisting of Pb, Cd and Cu from water or an aqueous system, wherein the treatment of said water or aqueous system is carried out at a pH from 6.0 to 7.5.

2. A method of chelating or removing a heavy metal selected from the group consisting of Pb, Cd and Cu from water or an aqueous system, the method comprising contacting said heavy metal with γ-polyglutamic acid (γ-PGA, H form), γ-polyglutamate in Na⁺ form, γ-polyglutamate in K⁺ form, or γ-polyglutamate in NH4⁺ form, or a mixture thereof, wherein the γ-PGA or γ-polyglutamate acts as a chelating agent for removing the heavy metal from the water or the aqueous system, wherein the treatment of said water or aqueous system is carried out at a pH of from 6.0 to 7.5.

## Patentansprüche

1. Verwendung von γ-Polyglutaminsäure (γ-PGA, H-Form), γ-Polyglutamat in Na⁺-Form, γ-Polyglutamat in K⁺-Form oder γ-Polyglutamat in NH₄⁺-Form oder einem Gemisch davon als einen Chelatbildner zum Entfernen eines Schwermetalls, ausgewählt aus der Gruppe bestehend aus Pb, Cd und Cu aus Wasser oder einem wässrigen System, wobei die Behandlung des Wassers oder des wässrigen Systems bei einem pH-Wert von 6,0 bis 7,5 durchgeführt wird.

2. Verfahren zum Chelatieren oder Entfernen eines Schwermetalls ausgewählt aus der Gruppe bestehend aus Pb, Cd, und Cu aus Wasser oder einem wässrigen System, wobei das Verfahren ein Kontaktieren des Schwermetalls mit γ-Polyglutaminsäure (γ-PGA, H-Form), γ-Polyglutamat in Na⁺-Form, γ-Polyglutamat in K⁺-Form oder γ-Polyglutamat in NH₄⁺-Form oder einem Gemisch davon umfasst, wobei das γ-PGA oder γ-Polyglutamat als ein Chelatbildner zum Entfernen des Schwermetalls aus dem Wasser oder dem wässrigen System wirkt, wobei die Behandlung des Wassers oder des wässrigen Systems bei einem pH-Wert von 6,0 bis 7,5 durchgeführt wird.

## Revendications

1. Utilisation d'acide γ-polyglutamique (γ-PGA, forme H), de γ-polyglutamate sous forme de Na⁺, de γ-polyglutamate sous forme de K⁺, ou de γ-polyglutamate sous forme de NH₄⁺, ou d'un mélange de ceux-ci en tant qu'agent de chélation pour éliminer un métal lourd choisi dans le groupe constitué par Pb, Cd et Cu de l'eau ou d'un système aqueux, le traitement de ladite eau ou dudit système aqueux étant effectué à un pH allant de 6,0 à 7,5.

2. Procédé de chélation ou d'élimination d'un métal lourd choisi dans le groupe constitué par Pb, Cd et Cu de l'eau ou d'un système aqueux, le procédé comprenant la mise en contact dudit métal lourd avec l'acide γ-polyglutamique (γ-PGA, forme H), le γ-polyglutamate sous forme de Na⁺, le γ-polyglutamate sous forme de K⁺ ou le γ-polyglutamate sous forme de NH₄⁺, ou un mélange de ceux-ci, le γ-PGA ou le γ-polyglutamate agissant en tant qu'agent de chélation pour éliminer le métal lourd de l'eau ou du système aqueux, le traitement de ladite eau ou dudit système aqueux étant effectué à un pH allant de 6,0 à 7,5.
